# EUROPÄISCHE PATENTANMELDUNG

(11) **EP 2 036 429 A1**
(43) Veröffentlichungstag der Anmeldung: **18.03.2009**
(21) Anmeldenummer: 08016097.1
(22) Anmeldetag: 12.09.2008
(51) Int. Cl.: A01G 17/06, A01G 17/08, A01G 17/14

(54) **Weinbaupfahl**

(30) Priorität: 17.09.2007 DE 102007044267
(71) Anmelder: Meiser, Wolfgang, 66636 Tholey (DE); Flick, Ulrich, 55234 Bechtolsheim (DE); Weinheimer, Dieter, 55234 Bechtolsheim (DE)
(72) Erfinder: Meiser, Wolfgang, 66636 Tholey (DE); Flick, Ulrich, 55234 Bechtolsheim (DE); Weinheimer, Dieter, 55234 Bechtolsheim (DE)
(74) Vertreter: Vièl, Christof

(57) **Zusammenfassung**

Die Erfindung betrifft einen Weinbaupfahl mit innenliegenden Haken.

Um einen Weinbaupfahl zu entwickeln, der sowohl einen guten Rückhalt des Drahtes ermöglicht als auch ein leichtes Herausziehen des Drahtes, beispielsweise bei Heftarbeiten, ermöglicht, wird im Rahmen der Erfindung vorgeschlagen, daß die Haken als im wesentlichen L-förmige Ausstanzungen an den Seitenkanten des Weinbaupfahls ausgebildet sind, wobei die Ausstanzungen einen ersten Schenkel sufweisen, der sich von der Außenkante des Weinbaupfahls im wesentlichen senkrecht zum Pfahlinneren erstreckt, einen zweiten Schenkel, der sich im wesentlichen parallel zur Außenkante des Weinbaupfahls erstreckt und einem dritten Schenkel, der sich vom Ende des zweiten Schenkels in Richtung der Außenkante des Weinbaupfahls erstreckt und daß der zweite Schenkel an seinem dem ersten Schenkel zugewandten Ende eine Ausbuchtung aufweist.

Die Ausbuchtung am dem ersten Schenkel zugewandten Ende des zweiten Schenkels, also an der Oberseite der Einfädelungsstelle, dient dem Rückhalt des Drahtes. In Hang- und Steillagen hängt sich der Draht in dieser Ausbuchtung ein. Das Herausziehen des Drahtes, z.B. bei Heftarbeiten, ist trotzdem sehr einfach zu bewerkstelligen.

## Beschreibung

Die Erfindung betrifft einen Weinbaupfahl mit innenliegenden Haken.

Weinbaupfähle als Stütze für in der Höhe versetzbare Drähte sind bekannt. Die Drähte werden in die Einhängeöffnungen eingelegt, die an dem Weinbaupfahl ausgebildet sind. Weinbaupfähle werden heute üblicherweise aus Stahl hergestellt.

Aus der DE 31 14 759 A1 ist ein derartiger Weinbaupfahl bekannt, der im Querschnitt ein kantiges Profil aufweist, das in Form einer symmetrischen Rinne an einer Längsachse offen ist. Verschiedene Ausführungsformen von Einhängelöchern sind aus der DE 29 33 550 A1, der DE 8123 071 U1 und der DE 86 20130 A1 bekannt.

Weiterhin ist aus der DE 197 49 236 A1 ein Weinbaupfahl bekannt, der bei einer geringen Anzahl von Abbiegungen, nämlich neun, eine hohe Biegesteifigkeit aufweist. Durch die geringe Zahl von Abbiegungen werden die Herstellkosten verringert.

Schließlich wird in der DE 299 12 475 U1 ein Pfahl aus Stahlblech beschrieben, der U- bzw. V-förmige Ausformungen für die Aufnahme des Drahtes aufweist, wobei die U- oder V-förmige Ausformung der seitlichen Schenkel zum Pfahlrücken gelegt ist und wobei die Stanzausparung in den Pfahlrücken hineingezogen ist.

Aufgabe der Erfindung ist es, einen Weinbaupfahl zu entwickeln, der sowohl einen guten Rückhalt des Drahtes ermöglicht als auch ein leichtes Herausziehen des Drahtes, beispielsweise bei Heftarbeiten, ermöglicht. Zudem soll der Weinbaupfahl der häufiger auftretenden Windbelastung bei Stürmen gut widerstehen und für eine automatisierte Bewirtschaftung des Weinberges geeignet sein.

Diese Aufgabe wird erfindungsgemäß dadurch gelöst, daß die Haken als im wesentlichen L-förmige Ausstanzungen an den Seitenkanten des Weinbaupfahls ausgebildet sind, wobei die Ausstanzungen einen ersten Schenkel aufweisen, der sich von der Außenkante des Weinbaupfahls im wesentlichen senkrecht zum Pfahlinneren erstreckt, einen zweiten Schenkel, der sich im wesentlichen parallel zur Außenkante des Weinbaupfahls erstreckt und einem dritten Schenkel, der sich vom Ende des zweiten Schenkels in Richtung der Außenkante des Weinbaupfahls erstreckt und daß der zweite Schenkel an seinem dem ersten Schenkel zugewandten Ende eine Ausbuchtung aufweist.

Durch die rechtwinklige Ausbildung der Haken und die geringen Ausstanzungen für die innen liegenden Haken wird eine bessere Standfestigkeit der Weinbaupfähle bei gleicher Materialstärke erreicht, so daß die Gefahr des Umknickens der Weinbaupfähle minimiert wird. Die Weinbaupfähle widerstehen besser den durch die klimatischen Veränderungen häufiger auftretenden starken Windbelastungen.

Die Ausbuchtung am dem ersten Schenkel zugewandten Ende des zweiten Schenkels, also an der Oberseite der Einfädelungsstelle, dient dem Rückhalt des Drahtes. In Hang- und Steillagen hängt sich der Draht in dieser Ausbuchtung ein. Das Herausziehen des Drahtes, z.B. bei Heftarbeiten, ist trotzdem sehr einfach zu bewerkstelligen.

Es ist vorteilhaft, daß der dritte Schenkel am der Außenkante zugewandten Ende seiner dem ersten Schenkel zugewandten Seite eine Ausbuchtung aufweist.

Diese Ausbuchtung dient zur Aufnahme des Drahtes.

Eine Ausbildung der Erfindung besteht darin, daß der dritte Schenkel am dem zweiten Schenkel zugewandten Ende seiner dem ersten Schenkel zugewandten Seite einen Vorsprung aufweist.

Dieser Vorsprung dient dazu, ein Herausspringen des Drahtes aus dem Haken zu verhindern.

Weiterhin ist erfindungsgemäß vorgesehen, daß der dritte Schenkel an seiner dem ersten Schenkel zugewandten Seite schräg verläuft, wobei der Bereich des größeren Querschnitts des dritten Endes an seinem dem zweiten Schenkel abgewandten Ende angeordnet ist.

Diese Maßnahme der schrägen Ausbildung der Fläche im Bereich der Drahtaufnahme dient ebenfalls dazu, das Herausspringen des Drahtes aus dem Haken zu verhindern.

Schließlich ist im Rahmen der Erfindung vorgesehen, daß die Breite des Bereiches zwischen dem ersten Schenkel und dem dritten Schenkel geringer ist als der übliche Durchmesser der Schläger von Traubenvollerntemaschinen.

Hierdurch wird ein Zuschlagen der Haken verhindert.

Nachfolgend wird ein Ausfübrungsbeispiel der Erfindung anhand von Zeichnungen beschrieben.

Es zeigen
- Fig. 1: einen erfindungsgemäßen Weinbaupfahl in geschnittener Darstellung,
- Fig. 2: einen erfindungsgemäßen Weinbaupfahl in perspektivischer Ansicht,
- Fig. 3a: einen erfindungsgemäßen Weinbaupfahl in Draufsicht, und
- Fig. 3b: eine Detailansicht zu Fig. 3a.

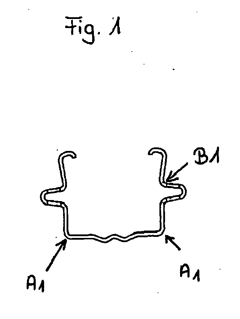

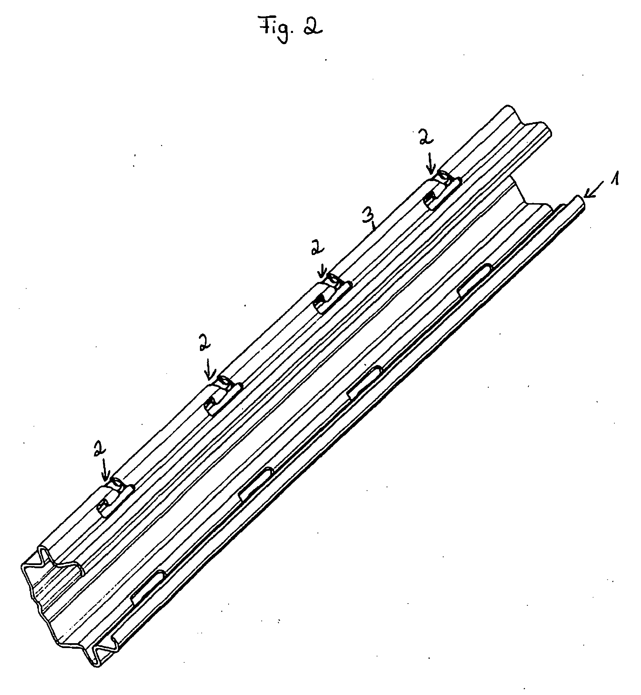

Wie aus den Fig. 1 bis 3b ersichtlich, weist der Weinbaupfahl 1 innen liegenden Haken 2 auf, die als im wesentlichen L-förmige Ausstanzungen an den Außenkanten 3 des Weinbaupfahls 1 ausgebildet sind. Die Haken 2 weisen einen ersten Schenkel 4, der sich von der Außenkante 3 des Weinbaupfahls 1 im wesentlichen senkrecht zum Pfahlinneren erstreckt, einen zweiten Schenkel 5, der sich im wesentlichen parallel zur Außenkante 3 des Weinbaupfahls 1 erstreckt und einem dritten Schenkel 6 auf, der sich vom Ende des zweiten Schenkels 5 in Richtung der Außenkante 3 des Weinbaupfahls 1 erstreckt.

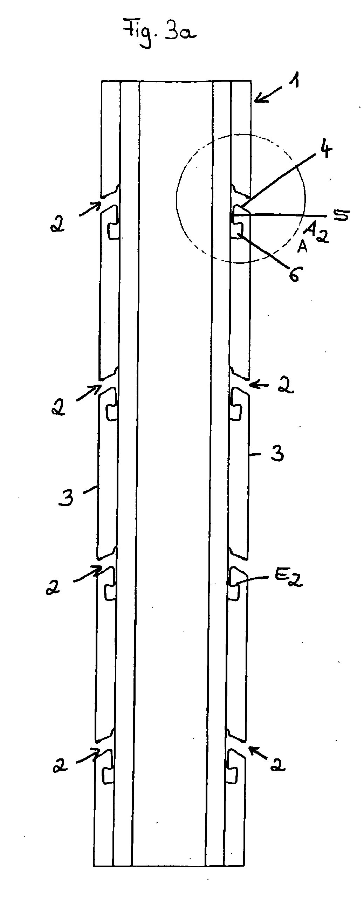

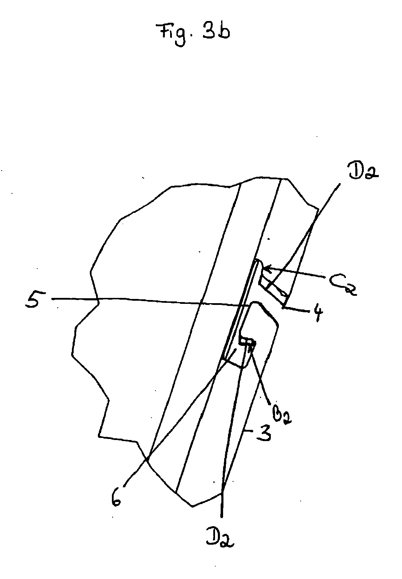

Der zweite Schenkel weist an seinem dem ersten Schenkel 4 zugewandten Ende eine Ausbuchtung C2 auf, die zum Zurückhalten des Drahtes dient. Wie aus den Fig. 3a und 3b ersichtlich, weisen der erste Schenkel 4 und der dritte Schenkel 6 eine deutlich größere Breite auf als der zweite Schenkel 5, wobei alle Schenkel 4, 5, 6 über ihre gesamte Länge jeweils eine im wesentlichen konstante Breite aufweisen. Dies liegt darin begründet, daß in dem zweiten Schenkel 5 der Draht nicht gehalten wird, sondern durch diesen Schenkel 5 lediglich zum dritten Schenkel 6 hin durchgeschoben wird. Je kleiner der Querschnitt des zweiten Schenkels 5 ist, um so geringer ist die Gefahr eines ungewollten Austritts des Drahtes aus dem dritten Schenkel 6.

Der dritte Schenkel 6 weist am der Außenkante 3 zugewandten Ende seiner dem ersten Schenkel 4 zugewandten Seite eine Ausbuchtung B2 und an dem zweiten Schenkel 5 zugewandten Ende seiner dem ersten Schenkel 4 zugewandten Seite einen Vorsprung E2 auf. Der Draht liegt nach dem Einfädeln in den Haken 2 in der Ausbuchtung B2 und wird durch den Vorsprung E2 am Herausspringen gehindert.

Darüber hinaus verläuft der dritte Schenkel 6 an seiner dem ersten Schenkel 4 zugewandten Seite D2 schräg, wobei der Bereich des größeren Querschnitts des dritten Schenkels 6 an seinem dem zweiten Schenkel 5 abgewandten Ende angeordnet ist. Durch diese Maßnahme ebenso wie die ebenfalls schräge Anordnung D2 im Bereich der Einfädelöffnung wird einem Herausspringen des Drahtes entgegengewirkt.

Durch diese Maßnahmen ist sichergestellt, daß bei einer entstehenden Spannung im Drahtrahmen der Draht in der Hakenöffnung gehalten wird.

Weiterhin ist die Breite des Bereiches A2 zwischen dem ersten und dem dritten Schenkel geringer als der übliche Durchmesser der Schläger von Traubenvollerntemaschinen, womit ein Zuschlagen der Haken 2 bei der Verwendung von Traubenvollerntemaschinen verhindert wird.

Die Profilierung Al des Weinbaupfahls ist rechtwinklig ausgebildet, was zusammen mit den möglichst klein gehaltenen Ausstanzungen für die Haken 2 zu einer höheren Belastbarkeit bei gleicher Materialstärke führt. Eine zusätzliche Stabilitätssteigerung wird durch 2 mm Material, welches im Profilierradius B1 in den Hakenraum hineingeht erreicht.

## Patentansprüche

1. Weinbaupfahl mit innenliegenden Haken (2), **dadurch gekennzeichnet, daß** die Haken (2) als im wesentlichen L-förmige Ausstanzungen an den Seitenkanten (3) des Weinbaupfahls (1) ausgebildet sind, wobei die Ausstanzungen einen ersten Schenkel (4) aufweisen, der sich von der Außenkante (3) des Weinbaupfahls (1) im wesentlichen senkrecht zum Pfahlinneren erstreckt, einen zweiten Schenkel (5), der sich im wesentlichen parallel zur Außenkante (3) des Weinbaupfahls (1) erstreckt und einem dritten Schenkel (6), der sich vom Ende des zweiten Schenkels (5) in Richtung der Außenkante (3) des Weinbaupfahls (1) erstreckt und daß der zweite Schenkel (5) an seinem dem ersten Schenkel (4) zugewandten Ende eine Ausbuchtung (C2) aufweist.

2. Weinbaupfahl gemäß Anspruch 1, **dadurch gekennzeichnet, daß** der dritte Schenkel (6) am der Außenkante (3) zugewandten Ende seiner dem ersten Schenkel (4) zugewandten Seite eine Ausbuchtung (B2) aufweist.

3. Weinbaupfahl gemäß Anspruch 1, **dadurch gekennzeichnet, daß** der dritte Schenkel (6) an dem dem zweiten Schenkel (5) zugewandten Ende seiner dem ersten Schenkel (4) zugewandten Seite einen Vorsprung (E2) aufweist.

4. Weinbaupfahl gemäß Anspruch 1, **dadurch gekennzeichnet, daß** der dritte Schenkel (6) an seiner dem ersten Schenkel (4) zugewandten Seite schräg verläuft, wobei der Bereich des größeren Querschnitts des dritten Endes an seinem dem zweiten Schenkel (5) abgewandten Ende angeordnet ist.

5. Weinbaupfahl gemäß Anspruch 1, **dadurch gekennzeichnet, daß** die Breite des Bereiches (A2) zwischen dem ersten Schenkel (4) und dem dritten Schenkel (6) geringer ist als der übliche Durchmesser der Schläger von Traubenvollerntemaschinen.
